## Europäisches Patentamt

## European Patent Office

## Office européen des brevets

(19)

(11) Veröffentlichungsnummer: **0 219 509**
**B1**

(12) **EUROPÄISCHE PATENTSCHRIFT**

(45) Veröffentlichungstag der Patentschrift:
08.03.89

(51) Int. Cl.⁴: **G 01 L 23/22**

(21) Anmeldenummer: **86901802.8**

(22) Anmeldetag: **14.03.86**

(86) Internationale Anmeldenummer:
**PCT/DE 86/00109**

(87) Internationale Veröffentlichungsnummer:
**WO 86/06477 (06.11.86 Gazette 86/24)**

(54) **ZÜNDKERZE MIT EINER DRUCKMESSVORRICHTUNG.**

(30) Priorität: **23.04.85 DE 3514597**

(43) Veröffentlichungstag der Anmeldung:
**29.04.87 Patentblatt 87/18**

(45) Bekanntmachung des Hinweises auf die Patenterteilung:
**08.03.89 Patentblatt 89/10**

(84) Benannte Vertragsstaaten:
**DE FR GB IT SE**

(56) Entgegenhaltungen:
**DE-B-1 015 623**

(73) Patentinhaber: **ROBERT BOSCH GMBH, Postfach 50, D-7000 Stuttgart 1 (DE)**

(72) Erfinder: **STEINKE, Leo, Haldenäcker 39, D-7050 Waiblingen- Hegnach (DE)**

**Beschreibung**

**Stand der Technik**

Die Erfindung geht aus von einer Zündkerze mit einer Druckmeßvorrichtung nach der Gattung des Anspruchs 1. Bei einer bekannten Zündkerze ist die innerhalb des Gehäuses der Zündkerze angeordnete Druckmeßvorrichtung durch einen zylinderförmigen, dünnwandigen Einsetskörper vom Isolator und auch vom Brennraum getrennt. Dadurch hat das Gehäuse selbst nur eine relativ dünne Außenwand, und aufgrund des separaten Einsetzkörpers ist der Aufbau der Zündkerze aufwendig und kompliziert. Aufgrund des Einsetzkörpers reagiert die Druckmeßvorrichtung relativ träge.

**Vorteile der Erfindung**

Die erfindungsgemäße Zündkerze mit den kennzeichnenden Merkmalen des Anspruchs 1 hat demgegenüber den Vorteil, daß die Druckmeßvorrichtung unmittelbar mit dem Druckraum in Verbindung steht. Dadurch hat die Druckmeßvorrichung eine relativ geringe Ansprechzeit und kann somit schnell auch geringe Druckschwankungen messen. Da die Druckmeßvorrichtung fest in einer Bohrung im Gehäuse der Zündkerze angeordnet ist, weist sie eine gewisse Schüttelfestigkeit auf, d. h. sie kann bei in Betrieb auftretenden Belastungen ihre Position nicht verändern und dadurch keine Fehlmessungen hervorrufen. Aufgrund der unsymmetrischen Anordnung der Mittelbohrung mit dem Isolatorkörper sind keine äußeren baulichen Veränderungen am Gehäuse der Zündkerze notwendig, so daß die Zündkerze problemlos in bisherige Anordnungen einbaubar ist.

Durch die in den abhängigen Ansprüchen 2 - 7 aufgeführten Maßnahmen sind vorteilhafte Weiterbildungen der im Hauptanspruch angegebenen Merkmale möglich.

**Zeichnung**

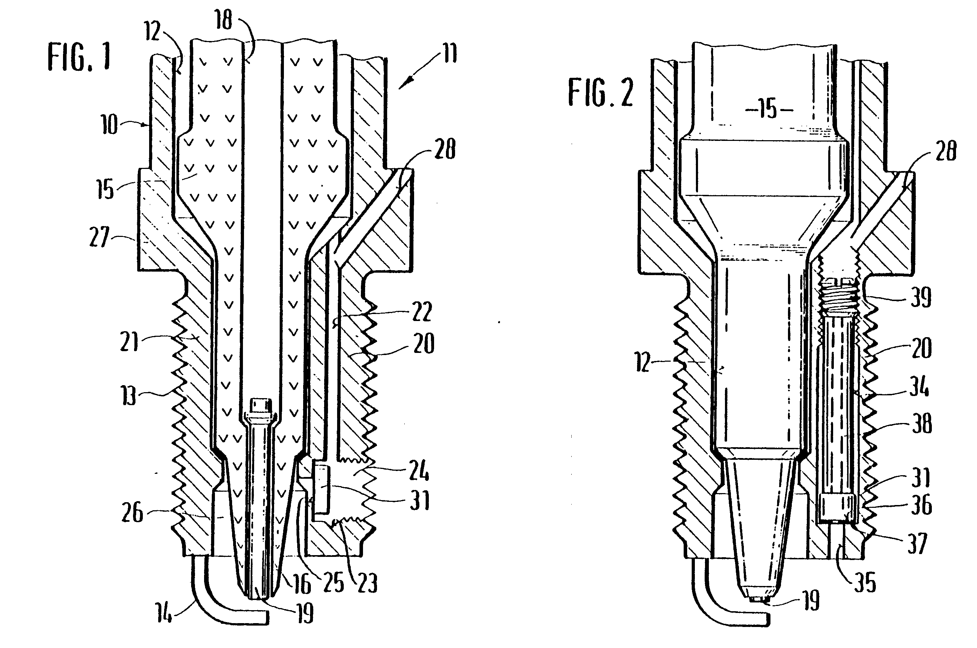

Ein Ausführungsbeispiel der Erfindung ist in der Zeichnung dargestellt und in der nachfolgenden Beschreibung näher erläutert. Die Figur 1 zeigt einen Tängsschnitt durch eine Zündkerze und die Figur 2 eine Abwandlung des Ausführungsbeispiels nach Figur 1.

**Beschreibung des Ausführungsbeispiels**

Im Gehäuse 10 einer Zündkerze 11 ist eine außermittige Längsbohrung 12 ausgebildet. Das Gehäuse 10 ist mit Hilfe eines Außengewindes 13 in herkömmlich bekannter Weise in einen Motorblock einschraubbar. Das Gehäuse 10 läuft an seinem brennraumseitigen Ende in eine Masseelektrode 14 aus. In der Längsbohrung 12 ist ein Isolatorkörper 15 angeordnet, dessen Isolatorfußspitze 16 der Masseelektrode 14 zugewandt ist. Ferner weist der Isolatorkörper 15 eine mittige Längsbohrung 18 auf, in der ein hier nicht dargestellter Anschlußbolzen und eine Mittelelektrode 19 angeordnet sind. Die Mittelelektrode 10 und die Masseelekrode 14 bilden zusammen die Funkenstrecke für die Zündkerze 11.

Aufgrund der außermittigen Anordnung der Längsbohrung 12 ergeben sich Gehäuseteile mit einer dicken 20 und einer dünnen 21 Wandstärke. Im Gehäuseteil 20 mit der dickeren Wandstärke ist eine parallel zur Längsbohrung 12 verlaufende Sackbohrung 22 ausgebildet. Am Bohrungsgrund 23 der Sackbohrung 22 ist eine quer zu dieser verlaufende Stufenbohrung 22 angeordnet, die mit ihrem Abschnitt 25 mit dem kleineren Durchmesser im Bereich der Isolatorfußspitze 16 in den Atmungsraum 26 der Zündkerze 11 mündet. Etwa im Bereich der Stauch- und Warmschrumpfzone 27 des Gehäuses 10 ist eine schräg verlaufende und in die Sackbohrung 22 mündende Bohrung 28 ausgebildet.

In der Stufenbohrung 24 befindet sich ein Drucksensor 31, der zum Messen der Verbrennungsdrücke im Brennraum dient. Dies kann ein herkömmlich bekannter Sensor mit piezoelektrischen Elementen oder auch mit piezoresistiven oder elektrodynamischen Elementen sein. Über den Abschnitt 25 der Stufenbohrung 24 ist der Drucksensor 31 direkt mit dem Brennraum in Wirkverbindung. Über die Sackbohrung 24 und die Bohung 28 führen die elektrischen Leitungen des Drucksensors 31 nach außen zu einer nicht dargestellten Auswerteeinrichtung.

In der Figur 2 sind gleiche Teile wieder mit denselben Ziffern bezeichnet. Im Gehäuseteil 20 mit der dickeren Wandstärke ist eine Stufenbohrung 34 ausgebildet, die parallel zur Längsbohrung 12 verläuft und mit der Bohrung 28 verbunden ist. Der Abschnitt 35 mit dem kleineren Durchmesser ist zum Brennraum hin angeordnet. An der Schulter 36 der Stufenbohrung 34 befindet sich eine Membran 37, die mit dem Drucksensor 31 in Wirkverbindung steht. Wie beim Ausführungsbeispiel nach Figur 1, kann dieser wieder piezoelektrische, piezoresistive oder elektrodynamische Elemente aufweisen. An den Drucksensor 31 legt sich ein hülsenförmiges Verlängerungsteil 38 an, das den Drucksensor 31 in seiner Position hält. Das Verlängerungteil 38 ist mit Hilfe einer Schraube 39 in der Stufenbohrung 34 befestigt. Um störungsfreie Signale des Drucksensors 31 zu erhalten, ist zwischen dem Anschlußbolzen und der Mittelelektrode 19 ein Entstörwiderstand anzuordnen.

Wichtig ist, daß die Längsbohrung 12 außermittig ausgebildet ist und somit ein Gehäuseteil 20 mit einer dickeren Wand entsteht, in der der Drucksensor 31 angeordnet ist.

Die Funktion einer Zündkerze ist hinreichend bekannt und deshalb hier nicht näher erläutert.

## Patentansprüche

1. Zündkerze (11) mit einer durchgehenden Längsbohrung (12) und einer innerhalb ihres Gehäuses (10) angeordneten Druckmeßvorrichtung (31), dadurch gekennzeichnet, daß die Längsbohrung (12) außermittig ausgebildet ist und die Druckmeßvorrichtung (31) im dickeren Teil (20) des Gehäuses (10) angeordnet ist.

2. Zündkerze nach Anspruch 1, dadurch gekennzechnet, daß im dickeren Teil (20) des Gehäuses (10) eine Bohrung (22, 34) ausgebildet ist, die in Verbindung mit einem Druckraum steht, dessen Druck zu bestimmen ist, und daß sich in dieser Bohrung (22, 34) die Druckmeßvorrichtung (31) befindet.

3. Zündkerze nach Anspruch 1 und/oder 2, dadurch gekennzeichnet, daß die Bohrung (34) parallel zur Längsbohrung (12) ausgebildet ist.

4. Zündkerze nach einem der Ansprüche 1 bis 3, dadurch gekennzeichnet, daß die Druckmeßvorrichtung (31) ein piezokeramisches Element aufweist.

5. Zündkerze nach einem der Ansprüche 1 bis 3, dadurch gekennzeichnet, daß die Druckmeßvorrichtung (31) ein piezoresistives Element aufweist.

6. Zündkerze nach einem der Ansprüche 1 bis 3, dadurch gekennzeichnet, daß die Druckmeßvorrichtung (31) ein elektrodynamisches Element aufweist.

7. Zündkerze nach einem der Ansprüche 1 bis 6, dadurch gekennzeichnet, daß zwischen Mittelelektrode (19) und Anschlußbolzen der Zündkerze (11) ein Widerstand angeordnet ist.

## Claims

1. Spark plug (11) having a longitudinal through bore (12) and a pressure measurement device (31) arranged inside its housing (10), characterised in that the longitudinal bore (12) is formed eccentrically and the pressure measurement device (31) is arranged in the thicker part (20) of the housing (10).

2. Spark plug according to Claim 1, characterised in that a bore (2, 2, 3, 4) which is connected to a pressure space, the pressure of which is to be determined, is formed in the thicker part (20) of the housing (10), and in that the pressure measurement device (31) is situated in this bore (22, 34).

3. Spark plug according to Claim 1 and/or 2, characterised in that the bore (34) is formed parallel to the longitudinal bore (12).

4. Spark plug according to one of Claims 1 to 3, characterised in that the pressure measurement device (31) has a piezoceramic element.

5. Spark plug according to one of Claims 1 to 3, characterised in that the pressure measurement device (31) has a piezoresistive element.

6. Spark plug according to one of Claims 1 to 3, characterised in that the pressure measurement device (31) has an electrodynamic element.

7. Spark plug according to one of Claims 1 to 6, characterised in that a resistor is arranged between the central electrode (19) and the contact stud of the spark plug (11).

## Revendications

1. Bougie d'allumage (11) avec un alésage longitudinal (12) traversant et un dispositif de mesure de pression (31) disposé à l'intérieur de son carter (10), caractérisée en ce que l'alésage longitudinal (12) est réalisée hors axe et que le dispositif de mesure de pression (31) est disposé dans la partie plus épaisse (20) du carter (10).

2. Bougie d'allumage selon la revendication 1, caractérisée en ce qu'un alésage (22, 34) est réalisé dans la partie plus épaisse (20) du carter (10), alésage relié à une chambre de pression dont la pression est à déterminer, et en ce que le dispositif de mesure de pression (31) se trouve dans cet alésage (22, 34).

3. Bougie d'allumage selon la revendication 1 et/ou 2, caractérisée en ce que l'alésage (34) est réalisé parallèlement à l'alésage longitudinal (12).

4. Bougie d'allumage selon l'une des revendications 1 à 3, caractérisée en ce que le dispositif de mesure de pression (31) présente un élément piézoélectrique.

5. Bougie d'allumage selon l'une des revendications 1 à 3, caractérisée en ce que le dispositif de mesure de pression (31) présente un élément piézorésistif.

6. Bougie d'allumage selon l'une des revendications 1 à 3, caractérisée en ce que le dispositif de mesure de pression (31) présente un élément électrodynamique.

7. Bougie d'allumage selon l'une des revendications 1 à 6, caractérisée en ce qu'une résistance est disposée entre l'électrode centrale (19) et le boulon de raccordement de la bougie d'allumage (11).

FIG. 2

FIG. 1